# FASCICULE DE BREVET EUROPEEN

(11) **EP 3 321 129 B1**
(45) Date de publication et mention de la délivrance du brevet: **12.06.2019**
(21) Numéro de dépôt: 17200684.3
(22) Date de dépôt: 08.11.2017
(51) Int. Cl.: B60Q 1/00

(54) **DISPOSITIF DE MONTAGE SANS VIS D'UN BOITIER DE COMMANDE DE PROJECTEUR SUR LEDIT PROJECTEUR**
SCHRAUBENLOSE MONTAGEVORRICHTUNG EINER STEUEREINHEIT EINES SCHEINWERFERS AUF DIESEM SCHEINWERFER
DEVICE FOR SCREWLESS MOUNTING OF A PROJECTOR CONTROL HOUSING ON SAID PROJECTOR

(30) Priorité: 09.11.2016 FR 1660858
(43) Date de publication de la demande: 16.05.2018
(73) Titulaire: Valeo Vision, 93012 Bobigny Cedex (FR)
(72) Inventeur: BADIA, Olivier, 93012 BOBIGNY Cedex (FR); ALVES, Jean-Philippe, 93012 BOBIGNY Cedex (FR)
(74) Mandataire: Valeo Vision

(56) Documents cités:
- EP-A1- 1 136 749
- DE-A1-102004 044 078
- GB-A- 2 297 148
- GB-A- 2 331 145
- JP-A- 2014 216 106

## Description

### DOMAINE DE L'INVENTION

L'invention se rapporte au domaine général des équipements automobiles. Elle se rapporte plus particulièrement au domaine des projecteurs lumineux destinés à équiper des véhicules automobiles.

### CONTEXTE DE L'INVENTION - ART ANTERIEUR

Pour réaliser le raccordement d'un projecteur lumineux au boitier de électronique par l'intermédiaire duquel il est commandé, il est connu d'utiliser des moyens de fixation permettant de fixer le boitier électronique directement sur le projecteur.

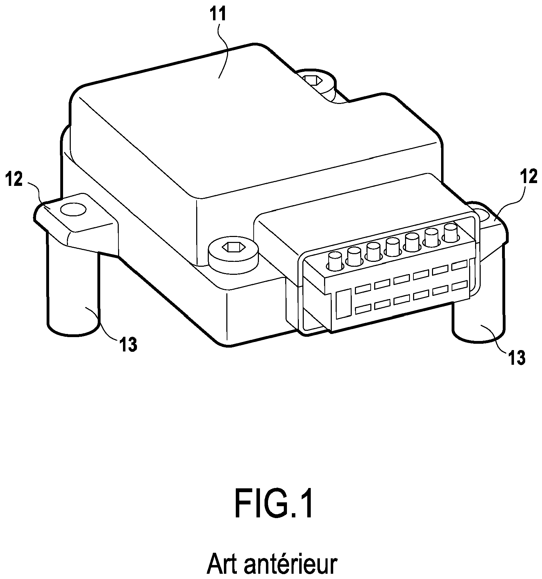

Pour ce faire la paroi du projecteur comporte par exemple une zone de fixation présentant un ou plusieurs fûts de vissage 13 sur lequel des brides de fixation disposées sur le bord du boitier viennent se fixer, par l'intermédiaire de vis par exemple. La figure 1 présente une illustration d'un tel boitier électronique 11 muni de deux pattes de fixation 12 percées chacune d'un trou destiné à laisser le passage à une vis de fixation.

Ce mode de montage connu, présente l'inconvénient de requérir une ou plusieurs opérations de vissage. Or, outre le fait qu'elles demandent généralement un outillage approprié pour assurer un vissage correct (i.e. un vissage suffisant mais non excessif) du boitier sur la paroi du projecteur, ces opérations d'assemblage par vissage requièrent généralement l'intervention d'un opérateur, le montage du boitier électronique sur le projecteur ne pouvant ainsi pas être réalisé de manière entièrement automatique. Elles demandent donc un temps de main d'oeuvre, qui, rapporté à la production d'une série de projecteurs, peut s'avérer important.

Un système d'assemblage selon le préambule de la revendication 1 est connu de JP 2014 216106.

### PRESENTATION DE L'INVENTION

Un but de l'invention est de proposer un système permettant de faciliter l'assemblage d'un boitier électronique de commande de projecteur sur le projecteur auquel il est destiné et, par là même de réduire le temps d'assemblage.

A cet effet l'invention a pour objet un système d'assemblage d'un boitier électronique de commande d'un dispositif lumineux pour véhicule sur une paroi dudit dispositif lumineux, ledit système comportant :- une platine d'interface solidaire du boitier électronique et placée à une extrémité du boitier électronique,- un élément d'assemblage configuré de façon à venir se fixer sur le boitier par l'intermédiaire de la platine d'interface, et - une embase de réception comprenant un fond, solidaire d'une paroi du dispositif lumineux, configurée de façon à former un réceptacle dans lequel le boitier équipé de l'élément d'assemblage puisse être logé, l'élément d'assemblage étant alors au contact du fond dudit réceptacle.

Selon l'invention, l'élément d'assemblage et le fond de l'embase de réception comportent des éléments de fixation, configurés pour coopérer de façon à assurer le maintien en place du boitier dans l'embase après son insertion dans cette dernière et l'élément d'assemblage comporte une partie centrale formant un tube de forme parallélépipédique avec deux extrémités ouvertes et une paroi externe comportant une première et une seconde faces d'appui opposées l'une à l'autre et deux faces latérales, la première face d'appui étant destinée à prendre appui sur le fond de l'embase de réception lorsque le boîtier est placé dans l'embase et la seconde face d'appui comportant deux prolongements latéraux plans conformés pour assurer le positionnement et la fixation de l'élément d'assemblage sur la platine d'interface.

Selon diverses dispositions pouvant être considérées séparément ou en combinaison, le système d'assemblage selon l'invention peut présenter diverses caractéristiques additionnelles.

Ainsi selon certaines dispositions:- l'élément d'assemblage et la platine d'interface sont configurés et agencés vis-à-vis du boitier électronique de telle façon que l'élément d'assemblage se trouve positionné dans le prolongement de l'extrémité du boitier par laquelle ce dernier est inséré dans l'embase de réception.- la platine d'interface est une partie intégrante de la paroi externe du boitier électronique.
- le fond de l'embase comportant un plot de fixation, la première face d'appui de la partie centrale de l'élément d'assemblage, en contact avec le fond de l'embase, est conformée de façon à intégrer un élément de fixation qui coopère avec ledit plot de fixation pour assurer le maintien du boitier à l'intérieur de l'embase.
- la première face d'appui de la partie centrale de l'élément d'assemblage présente une ouverture longitudinale en regard de laquelle est positionnée une rondelle élastique à griffe, de telle façon que, lorsque le boitier est placé dans l'embase, la rondelle élastique vienne sertir le plot de fixation.
- la paroi interne de l'élément d'assemblage définit, en outre, deux rainures longitudinales s'étendant entre les deux extrémités de la partie centrale, au voisinage de la première face d'appui, lesdites rainures longitudinales étant configurées de façon à ce que la rondelle élastique puisse y être insérée.
- la platine d'interface est agencée sur le boitier au niveau du bord du boitier par lequel ce dernier est inséré dans l'embase, la platine d'interface comportant une surface plane qui prolonge la paroi dudit boitier et qui présente deux bords latéraux et un bord frontal.
- les prolongements latéraux de la seconde face d'appui sont conformés de façon à ce que, lorsque l'élément d'assemblage est fixé sur la platine d'interface, une extrémité de la partie centrale prenne appui sur la platine, de sorte que la première face d'appui de l'élément d'assemblage se trouve positionnée dans le prolongement du bord du boitier par lequel ce dernier est inséré dans l'embase.
- la surface plane de la platine d'interface est bordée sur ses bords latéraux de parois définissant deux rainures opposées, placées en retrait par rapport au bord frontal de la surface plane, dont les largeurs correspondent sensiblement à l'épaisseur des prolongement latéraux de l'élément d'assemblage de telle sorte que, lorsque l'élément d'assemblage est monté sur la platine d'interface, les prolongements latéraux viennent s'insérer dans les rainures jusqu'à ce qu'ils viennent au contact de la surface plane.
- les bords des deux prolongements latéraux de l'élément d'assemblage, destinés à venir au contact de la surface plane de la platine d'interface, sont conformés de façon à présenter chacun un prolongement formant une patte de fixation élastique. Les pattes de fixation ainsi formées sont configurées et agencées de façon à venir au contact du bord frontal de la surface plane, au niveau de deux encoches formant des zones de retrait. Lesdites encoches sont configurées de telle façon que, lorsque les deux prolongements latéraux sont insérés dans les rainures, les extrémités des pattes de fixation traversent la surface plane de la platine d'interface au niveau des encoches et viennent bloquer, par leurs extrémités, les bords des prolongements latéraux contre la surface plane de la platine d'interface.
- l'embase de réception comporte sur ses parois internes des nervures saillantes agencées de façon à assurer le maintien du boitier équipé de l'élément d'assemblage, lorsque celui-ci est mis en place dans l'embase de réception.
- l'une des faces de la paroi de l'embase de réception comporte une ouverture longitudinale agencée de telle façon que ses bords assurent le guidage du boitier au niveau de l'élément d'assemblage de façon à ce que, lorsque le boitier est inséré dans l'embase de réception, le moyen de fixation de l'élément d'assemblage se trouve naturellement en regard de celui de l'embase avec lequel il coopère.

L'invention a également pour objet un dispositif lumineux pour véhicule, comprenant au moins un système d'assemblage selon l'invention.

L'invention a encore pour objet un procédé pour réaliser le montage d'un boitier électronique sur un dispositif lumineux pour véhicule au moyen d'un système d'assemblage selon l'invention, ledit procédé comportant:
- une première étape de montage de l'élément d'assemblage sur le boitier, le montage étant réalisé par fixation de l'élément d'assemblage sur la platine d'interface solidaire du boitier;
- une seconde étape de montage du boitier équipé de l'élément d'assemblage sur le dispositif lumineux, le montage étant réalisé en insérant le boitier dans l'embase de réception par son bord à l'extrémité duquel est monté l'élément d'assemblage, jusqu'à ce que l'élément d'assemblage soit en butée contre le fond de l'embase.

### DESCRIPTION DES FIGURES

Les caractéristiques et avantages de l'invention seront mieux appréciés grâce à la description qui suit, description qui s'appuie sur les figures annexées, relatives à un exemple de réalisation particulier du système d'assemblage selon l'invention. Ces figures présentent:
- la figure 1, l'illustration d'un mode d'assemblage courant, connu de l'art antérieur, permettant de monter un boitier électronique sur un dispositif commandé par l'intermédiaire dudit boitier;
- les figures 2 à 4, des illustrations présentant les différents éléments du système d'assemblage selon l'invention;
- la figure 5, une vue schématique montrant le boitier électronique placé dans l'embase de réception du système d'assemblage selon l'invention;
- les figures 6 et 7, des illustrations représentant l'élément d'assemblage permettant de fixer le boitier électronique à l'embase de réception du système d'assemblage selon l'invention;
- la figure 8, une illustration présentant la platine d'interface de l'élément d'assemblage avec le boitier électronique;
- la figure 9, une illustration montrant l'élément d'assemblage monté sur la platine d'interface de la figure 8;
- les figures 10 et 11, des illustrations présentant l'embase de réception du système d'assemblage selon l'invention;
- la figure 12, une vue agrandie d'un détail de la figure 5, mettant en évidence le mécanisme de fixation du boitier électronique, équipé de l'élément d'assemblage sur l'embase de réception.

Il est à noter que sur les différentes figures, un même élément structurel ou fonctionnel est identifié par un même repère numérique ou alphanumérique.

### DESCRIPTION DETAILLEE

La description qui suit présente le système de fixation selon l'invention au travers d'un mode de réalisation pris à titre d'exemple, destiné à mettre en évidence les caractéristiques et avantages de l'invention. Il est cependant entendu que l'objet de l'invention ne se limite pas à ce seul mode de réalisation et que l'objet de l'invention est défini dans sa portée et son étendue par les revendications associées à la présente description.

De manière générale le système d'assemblage selon l'invention comporte trois éléments qui coopèrent pour permettre un montage rapide et facile d'un boitier, un boitier renfermant une électronique de commande par exemple, sur une paroi d'un équipement dont le boitier est par exemple chargé d'assurer le fonctionnement.

Le premier élément comporte principalement une embase de réception formant un réceptacle dont la forme et les dimensions sont adaptées à celles du boitier considéré.

Le second élément permet d'assurer le maintien du boitier dans l'embase lorsque le boitier est mis en place dans cette dernière. Ce second élément comporte principalement un élément d'assemblage.

Le troisième élément est principalement constitué d'une interface mécanique, ou platine d'interface, sur laquelle vient se fixer l'élément d'assemblage constituant le second élément.

Selon l'invention l'élément d'assemblage est configuré pour venir se fixer sur le boitier par l'intermédiaire de l'interface mécanique que constitue le troisième élément. Il est par ailleurs également configuré pour permettre, lorsqu'il est monté sur le boitier, de fixer ledit boitier dans l'embase de réception par l'intermédiaire d'un élément de fixation intégré à cette embase. Il présente ainsi deux zones de fixation distinctes, une première zone de fixation lui permettant de venir se fixer sur le boitier et une seconde zone de fixation lui permettant de venir se fixer sur l'embase de réception.

Selon l'invention également, ces zones de fixation sont agencées de telle façon que lorsque l'élément d'assemblage est fixé sur le boitier, l'ensemble ainsi formé puisse être introduit dans l'embase de réception et que l'insertion complète du boitier dans l'embase entraine la fixation automatique de l'élément d'assemblage sur l'embase. De la sorte, le boitier étant solidaire de l'élément d'assemblage, il se retrouve maintenu en position dans l'embase.

De manière préférentielle, l'élément d'assemblage est configuré de telle façon que l'utilisation du système d'assemblage selon l'invention n'influe pas sur les dimensions de l'embase de réception, celles-ci étant principalement définies par les dimensions du boitier. A cet effet l'élément d'assemblage est configuré de façon à venir se loger au fond de l'embase de réception, entre le fond de l'embase et le boitier proprement dit, et venir se fixer sur le fond de l'embase.

La suite du texte présente le système d'assemblage selon l'invention au travers d'un exemple particulier de réalisation adapté au montage d'un boitier électronique destiné à commander un projecteur d'éclairage d'un véhicule automobile, sur la paroi dudit projecteur.

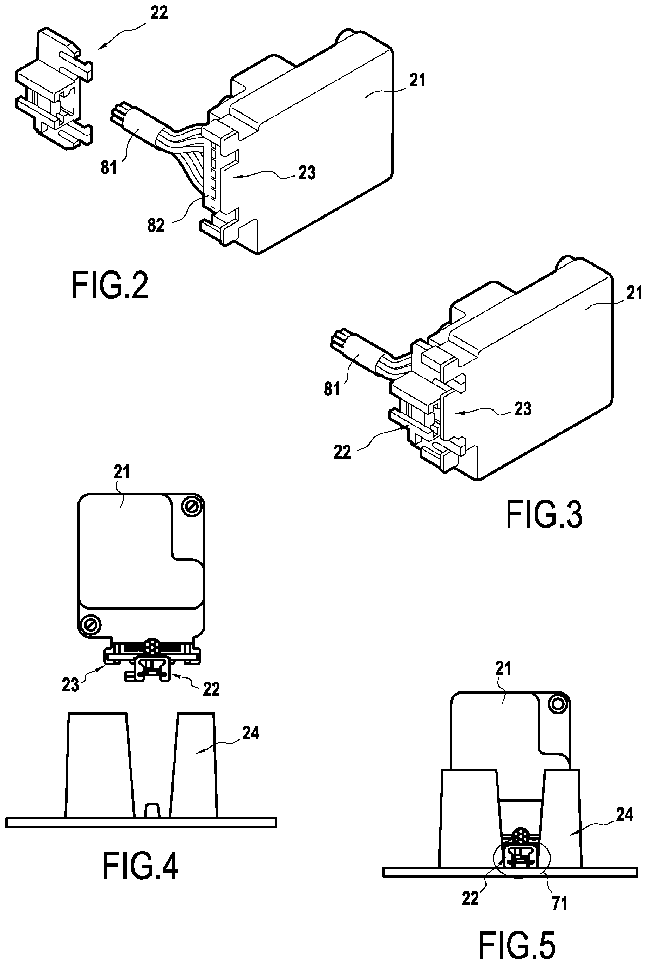

Comme l'illustrent les figures 2 à 4, le système d'assemblage selon l'invention comporte ainsi principalement trois éléments:
- un élément d'assemblage 22;
- une platine d'interface 23, solidaire du boitier électronique 21 considéré, sur laquelle l'élément d'assemblage 22 vient se fixer;
- une embase de réception 24, formant un réceptacle, dans laquelle le boitier 21 équipé de l'élément d'assemblage 22 est destiné à venir se loger.

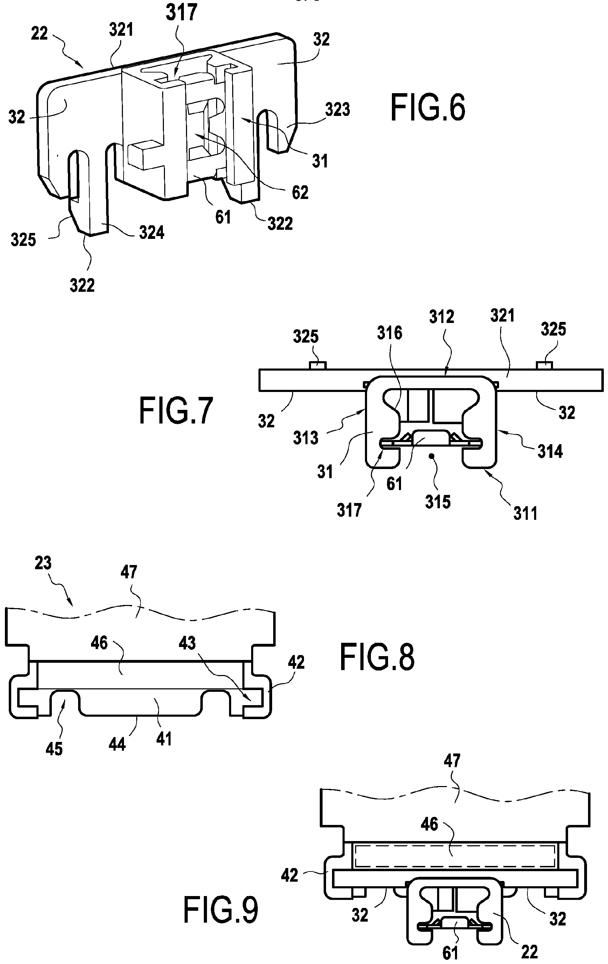

Dans l'exemple de réalisation considéré ici, l'élément d'assemblage 22, illustré par les figures 6 et 7, se présente comme un élément extrudé, comportant une partie centrale 31 de forme générale parallélépipédique, avec une paroi externe présentant deux faces d'appui planes 311 et 312 et deux faces latérales 313 et 314. Il comporte également deux prolongements latéraux plans 32 adjacent à une des faces d'appui 312. Ces deux prolongements latéraux étant configurés pour réaliser l'interface mécanique avec la platine d'interface 23.

La face d'appui 311 de la partie centrale 31, opposée à la face 312 bordée par les prolongements 32, présente une ouverture longitudinale 315.

Par ailleurs, la partie centrale 31 présente une face interne 316 limitant une ouverture qui s'étend sur toute la longueur de la partie centrale et dont le profil définit deux glissières longitudinales 317. Les glissières sont configurées pour recevoir une rondelle annulaire 61, de telle façon que, lorsque ladite rondelle est insérée entre ces glissières, elle ferme l'ouverture 315, ne laissant subsister qu'une ouverture sensiblement circulaire 62.

Le profil de la face interne 316 de la partie centrale est quant à lui défini de telle façon que la largeur des glissières 317 soit ajustée à l'épaisseur de la rondelle 61.

Les prolongements latéraux 32 forment une structure plate s'inscrivant dans une forme sensiblement rectangulaire et comportant deux bords latéraux et deux bords transversaux 321 et 322.

Un des bords transversaux 321 de cette structure est préférentiellement aligné sur un des bords d'extrémités limitant la partie centrale 31 et présente un profil sensiblement rectiligne.

L'autre bord transversal 322, bord transversal opposé au bord 321, présente un profil formant deux encoches qui délimitent, au niveau de chaque prolongement 32, une lame interne 324. Au niveau de la partie centrale 31 de l'élément d'assemblage 22 et du bord latéral 323 de chaque prolongement 32, le bord transversal 322 est sensiblement aligné sur le bord d'extrémité de la partie centrale 31 opposé à celui sur lequel le bord transversal 322 est aligné, tandis que l'extrémité de la lame interne 324 s'étend quant à elle au-delà de cet alignement.

Par ailleurs, l'extrémité de la lame interne 324 est conformée de façon à constituer une butée 325 faisant saillie sur la face externe de la structure formée par les deux prolongements latéraux 32, autrement dit la face qui n'est pas en contact avec la partie centrale 31.

Afin d'assurer le montage de l'élément d'assemblage 22 sur le boitier 21, ce dernier est équipé d'une platine d'interface 23, sur laquelle l'élément d'assemblage 22 vient se fixer. La fixation de l'élément d'assemblage sur la platine 23, illustrée par la figure 8, est préférentiellement réalisée par enclipsage.

A cet effet la platine d'interface 23 présente une surface plane 41 formant une face d'appui, sur laquelle vient s'appuyer la face interne de partie centrale 31 de l'élément d'assemblage 22. Cette face d'appui 41 est limitée latéralement par des parois 42 qui définissent deux rainures 43 dans lesquelles les bords 323 des prolongements latéraux 32 de l'élément d'assemblage 22 viennent se glisser lorsque ce dernier est arrimé à la platine 23.

La surface plane 41 de la platine 23 présente également, sur son bord externe 44, deux découpes formant des ouvertures 45 qui permettent au bord transversal 322 de venir prendre appui sur la platine 23, en ménageant un passage aux lames internes 324 lorsque les bords 323 des prolongements latéraux 32 coulissent le long des encoches latérales 43.

Les dimensions de ces découpes sont définies de telle façon que, lorsque l'élément d'assemblage 22 est mis en place sur la platine 23, les lames internes 324 soient sensiblement en contact avec le bord externe 44 de la platine de sorte que, du fait des conformations protubérantes 325 présentes aux extrémités des lames internes 324, l'insertion des lames internes au travers des ouvertures 45 entraine, au début de l'insertion, un fléchissement élastique desdites lames permettant le passage des extrémités des lames 324 au travers des ouvertures 45.

Selon un mode de réalisation préféré, illustré notamment par la figure 6, les lames internes 324 présentent une épaisseur qui croit brièvement de manière régulière depuis leur extrémité puis se réduit brutalement pour prendre une épaisseur constante, la réduction brutale d'épaisseur formant une butée arrière empêchant le retrait involontaire de l'élément d'assemblage 22 un fois que celui-ci est monté sur le boitier 21.

Selon l'invention, la platine d'interface 23, permettant le montage de l'élément d'assemblage 22 sur le boitier 21, est solidaire du boitier. Cependant selon que le boitier 21 considéré est initialement prévu, ou non, pour être monté sur l'équipement auquel il est associé par l'intermédiaire du système d'assemblage selon l'invention, la platine d'interface peut être directement réalisée dans la paroi du boitier 21 ou bien consister en une pièce rapportée montée sur cette même paroi.

Dans l'exemple de réalisation détaillé ici la platine d'interface 23 est disposée à une extrémité du boîtier 21, dans le prolongement de celui-ci, au niveau du bord du boitier par lequel celui-ci est introduit dans l'embase de réception 24. Comme l'illustrent les figures 2 et 3 notamment, elle est réalisée dans la paroi d'un des capots formant le boitier 21. Elle est par ailleurs placée au niveau du bord 47 du boitier 21 par lequel est réalisée l'interconnexion électrique du boitier, de sorte qu'elle est dimensionnée de façon à ménager un espace permettant la mise en place d'un connecteur 82, tout en assurant son maintien en place lorsque l'élément d'assemblage 22 est monté.

Dans cette configuration, illustrée par la figure 9, le connecteur 82 vient occuper une zone 46 de la platine 23 située entre le bord 47 du boitier 21 et la face externe de la structure formée par les deux prolongements latéraux 32 de l'élément d'assemblage 22. De la sorte, lorsque l'élément d'assemblage 22 est monté sur le boitier 21, la prise reliée au connecteur porté par le bord 47 du boitier ne peut avantageusement pas se détacher du boitier.

Outre l'élément d'assemblage 22 et la platine d'interface 23, le système d'assemblage selon l'invention comporte également une embase de réception 24 formant un réceptacle dans lequel le boitier 21 est destiné à être placé. Outre le fait qu'elle présente une forme et des dimensions adaptées au boitier 21, l'embase de réception 24 comporte avantageusement des moyens de fixation qui coopèrent avec l'élément d'assemblage 22 pour assurer le maintien en place du boitier 21, lorsque celui-ci est inséré dans l'embase.

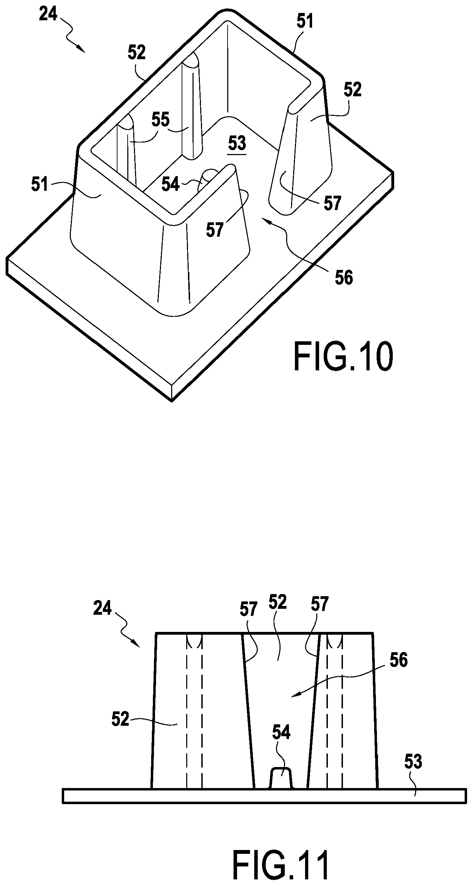

Les figures 10 et 11 présentent des vues détaillées de l'embase 24 correspondant plus particulièrement à l'exemple de réalisation considéré ici et également illustré par les figures 2 à 9.

De manière générale, cependant, l'embase de réception 24 se présente comme un réceptacle, un étui, de forme sensiblement parallélépipédique, comportant des parois latérales 51 et 52, ainsi qu'une paroi d'extrémité 53 ou fond, l'autre extrémité de l'embase étant ouverte et permettant l'insertion du boitier 21 dans l'embase. Les dimensions des parois latérales 51 et 52, la hauteur notamment, sont définies de façon à permettre un maintien en place naturel du boitier 21.

D'un point de vue fonctionnel, l'embase 24 est solidaire de la paroi de l'équipement, du projecteur, piloté par le boitier 21.

De manière préférentielle l'embase est directement réalisée dans la paroi de l'équipement et fait partie intégrante de cette paroi.

De manière alternative cependant, elle peut être réalisée de manière indépendante puis fixée sur la paroi de l'équipement à un emplacement déterminé. Elle peut alors être fixée par tout moyen connu approprié, compte tenu notamment du matériau qui la constitue et de celui qui constitue la paroi de l'équipement.

Selon l'invention, le fond 53 de l'embase 24 comporte des moyens de fixation destinés à coopérer avec les moyens de fixation dont est pourvu l'élément d'assemblage 22. Ces moyens de fixation assurent un maintien renforcé du boitier 21 dans l'embase 24, maintien qui permet d'éviter tout retrait involontaire du boitier hors de l'embase.

La fixation peut être réalisée de différentes façons connues, compte tenu du fait que le boitier 21 ne peut se déplace à l'intérieur de l'étui qu'en translation. Elle peut par exemple être réalisée par enclipsage, par emboitement/emmanchement ou, comme dans l'exemple de réalisation décrit ici et illustré par les figures 10 à 12, par sertissage.

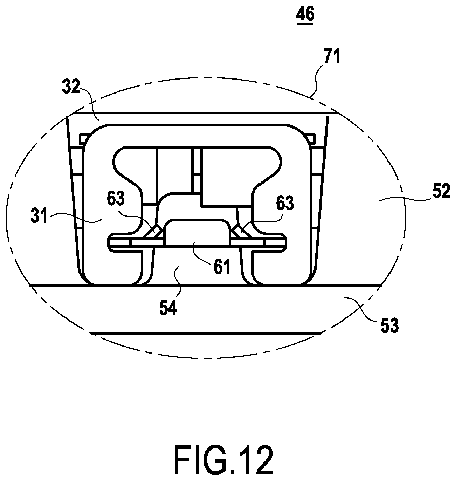

Dans cet exemple de réalisation, l'embase de réception 24 comporte à cet effet un pion de fixation 54 sur lequel vient s'enficher la rondelle élastique 61 de l'élément d'assemblage 22, la rondelle 61 étant dans ce cas une rondelle de type rondelle à griffe. Les diamètres respectifs du pion 54 et de l'ouverture de la rondelle à griffe 61 sont définis de telle façon que la rondelle 61 vienne sertir le pion 54 lorsque le boitier 21 équipé de son élément d'assemblage 22 est inséré dans l'embase 24. Lors de l'insertion, comme l'illustre en particulier la vue partielle agrandie de la figure 12, les bords 63 de l'ouverture de la rondelle à griffe 61 viennent ainsi mordre la surface externe du pion 54, de sorte que le l'extraction du boitier 21 hors de l'embase 24 ne peut se produire accidentellement et nécessite l'application d'une certaine force d'extraction de la part d'un opérateur.

Dans une forme de réalisation préférée le pion de fixation 54 est de forme tronconique de façon à faciliter l'insertion du boitier 21 dans l'embase 24 et assurer un sertissage progressif, les bords élastiques 63 de l'ouverture de la rondelle à griffe 61 étant écartés progressivement au contact de la paroi du pion 54.

Comme il a été dit précédemment, l'embase 24 présente une forme et des dimensions adaptées aux dimensions du boitier 21 destiné à y être logé, le but étant que les parois mêmes de l'embase assurent un certain maintien du boitier, l'empêchant de se déplacer latéralement lorsqu'il est placé dans l'embase de réception.

A cet effet les dimensions de la cavité formée par l'embase 24 peuvent être définies de telle façon que les parois du boitier soient au contact des parois de l'embase.

Alternativement, les dimensions de la cavité formée par l'embase 24 peuvent être définies de façon à laisser un espace entre les parois internes de l'embase 24 et les parois du boitier 21. Dans ce cas le maintien en place du boitier à l'intérieur de l'embase peut être réalisé en ménagent sur la paroi interne de l'embase des nervures 55 faisant saillie dans la cavité, comme illustré par la figure 10. Lesdites nervures forment alors des zones d'appui locales qui sont en contact avec les parois du boitier 21 et assurent à ce dernier un maintien latéral, tout en ménageant un espace entre le boitier 21 et la paroi de l'embase 24. La présence d'un tel espace permet notamment de favoriser le cas échéant, la dissipation thermique du boitier 21 par échange thermique avec l'air ambiant.

Selon l'invention, la paroi de l'embase 24 présente, par ailleurs, une forme permettant au boitier 21 considéré de s'insérer dans l'embase. Or, pour des raisons tant fonctionnelles que structurelles, la conformation du boitier peut présenter des spécificités dont la paroi de l'embase doit pouvoir tenir compte en présentant certaines caractéristiques morphologiques particulières.

C'est par exemple le cas si la paroi du boitier 21 présente un orifice permettant d'atteindre un élément de réglage sans avoir à ouvrir le boitier.

C'est également le cas si le boitier présente une découpe donnant accès à un connecteur sur lequel une prise peut être raccordée, de manière temporaire ou non.

Dans ces deux premiers cas la paroi de l'embase 24 présente une découpe permettant l'accès à l'orifice ou à la prise même lorsque le boitier 21 est placé dans l'embase.

C'est encore le cas lorsque, comme dans l'exemple de réalisation présenté ici, le boitier 21 considéré est configuré pour être relié à d'autres éléments par l'intermédiaire d'une liaison filaire 81, reliée au boitier par l'intermédiaire d'un connecteur 82 à sortie coudée, la liaison filaire abordant alors le boitier suivant une direction perpendiculaire à la paroi du boitier, comme illustré par les figures 2 et 3. Dans ce dernier cas, la paroi de l'embase 24 est pourvue d'une ouverture 56 permettant l'insertion du boitier 21 dans l'embase alors que celui-ci est déjà relié à la liaison filaire 81.

Avantageusement cette ouverture peut être conformée de façon à servir de guide à l'élément d'assemblage 22 pendant l'insertion du boitier 21 dans l'embase 24, de façon à faciliter le positionnement du boitier dans l'embase, notamment dans le cas où la paroi de l'embase n'est pas en contact avec la paroi du boitier. Ce guidage permet d'assurer, de manière automatique, le positionnement du pion de fixation 54 vis-à-vis de l'ouverture de la rondelle à griffe 61.

Selon l'invention chacun de ces trois éléments décrits précédemment, qui constituent le système d'assemblage, est réalisé dans un matériau choisi à la fois en fonction de ses caractéristiques techniques et en fonction de considérations de facilité et de coût de réalisation.

Ainsi en ce qui concerne le premier élément de fixation, qui correspond à l'embase de fixation 23 dans l'exemple de réalisation décrit ici, celui-ci est de préférence réalisé comme une partie intégrante de la paroi du boitier et, en tant que telle, réalisé dans le même matériau que le boitier (matière plastique ou métal selon les cas).

De même en ce qui concerne l'embase de réception, qui correspond à l'embase 24 dans l'exemple de réalisation décrit ici, celle-ci est de préférence réalisée comme une partie intégrante de la paroi de l'équipement sur lequel le boitier est destiné à être fixé et, en tant que telle, réalisée dans le même matériau que le boitier (matière plastique ou métal selon les cas).

En ce qui concerne l'élément d'assemblage, en revanche, celui-ci- est de préférence réalisé dans un matériau présentant une certaine élasticité, en polymère thermoplastique de type ABS, polycarbonate (PC), ABS-PC, Polypropylène (PP), Polyoxyméthylène (POM), Polyamide (PA), NORYL, Polytéréphtalate de butylène (PBT) ou Polyétheréthercétone (PEEK) par exemple. Cette élasticité permet notamment de faciliter le montage de l'élément d'assemblage sur le boitier et la fixation du boitier équipé de son élément d'assemblage dans l'embase de réception.

Comme il apparait au travers de la description qui précède, le système selon l'invention permet de manière avantageuse de réaliser l'opération de montage d'un boitier électronique de commande sur un équipement de manière simple et rapide, sans avoir recours notamment à un quelconque outillage de fixation. Grâce au système d'assemblage selon l'invention, l'opération d'assemblage consiste simplement à monter l'élément d'assemblage sur le boitier, puis à glisser le boitier équipé de son élément d'assemblage dans l'embase jusqu'à ce que l'élément d'assemblage vienne sertir le plot de fixation situé sur le fond de l'embase.

## Revendications

1. Système d'assemblage (22, 23, 24) d'un boitier électronique (21) de commande d'un dispositif lumineux pour véhicule sur une paroi dudit dispositif lumineux, ledit système comportant
- une platine d'interface (23) solidaire du boitier électronique (21) et placée à une extrémité (47) du boitier électronique (21),
- un élément d'assemblage (22) configuré de façon à venir se fixer sur le boitier (21) par l'intermédiaire de la platine d'interface (23), et
- une embase de réception (24) comprenant un fond (53), prévue pour être solidaire d'une paroi du dispositif lumineux, configurée de façon à former un réceptacle dans lequel le boitier (21) équipé de l'élément d'assemblage (22) puisse être logé, l'élément d'assemblage (22) étant alors au contact du fond (53) dudit réceptacle; l'élément d'assemblage (22) et le fond (53) de l'embase de réception (24) comportant des éléments de fixation (61, 54), configurés pour coopérer de façon à assurer le maintien en place du boitier (21) dans l'embase (24) après son insertion dans cette dernière,
**caractérisé en ce que** l'élément d'assemblage (22) comporte une partie centrale (31) formant un tube de forme parallélépipédique avec deux extrémités ouvertes et une paroi externe comportant une première et une seconde faces d'appui (311, 312) opposées l'une à l'autre et deux faces latérales (313, 314), la première face d'appui (311) étant destinée à prendre appui sur le fond (53) de l'embase de réception (24) lorsque le boitier (21) est placé dans l'embase et la seconde face d'appui (312) comportant deux prolongements latéraux plans (32) conformés pour assurer le positionnement et la fixation de l'élément d'assemblage (22) sur la platine d'interface (23).

2. Système d'assemblage selon la revendication 1, **caractérisé en ce que** l'élément d'assemblage (22) et la platine d'interface (23) sont configurés et agencés vis-à-vis du boitier électronique (21) de telle façon que l'élément d'assemblage (22) se trouve positionné dans le prolongement de l'extrémité (47) du boitier (21) par laquelle ce dernier (21) est inséré dans l'embase de réception (24).

3. Système d'assemblage selon l'une des revendications 1 ou 2, **caractérisé en ce que** la platine d'interface (23) est une partie intégrante de la paroi externe du boitier électronique (21).

4. Système d'assemblage selon la revendication 3, **caractérisé en ce que**, le fond (53) de l'embase (24) comporte un plot de fixation (54) et la première face d'appui (311) de la partie centrale (31) de l'élément d'assemblage (22), en contact avec le fond (53) de l'embase, est conformée de façon à intégrer l' élément de fixation qui coopère avec ledit plot de fixation (54) pour assurer le maintien du boitier (21) à l'intérieur de l'embase (24).

5. Système d'assemblage selon la revendication 4, **caractérisé en ce que** la première face d'appui (311) de la partie centrale (31) de l'élément d'assemblage (22) présente une ouverture longitudinale (315) en regard de laquelle est positionnée une rondelle élastique à griffe (61), de telle façon que, lorsque le boitier (21) est placé dans l'embase (24), la rondelle élastique (61) vienne sertir le plot de fixation (54).

6. Système d'assemblage selon la revendication 5, **caractérisé en ce que** le profil de la paroi interne (316) de l'élément d'assemblage (22) définit deux rainures longitudinales (317) s'étendant entre les deux extrémités de la partie centrale, au voisinage de la première face d'appui (311), lesdites rainures longitudinales (317) étant configurées de façon à ce que la rondelle élastique (61) puisse y être insérée.

7. Système d'assemblage selon l'une quelconque des revendications 1 à 6, **caractérisé en ce que** la platine d'interface (23) est agencée sur le boitier (21) au niveau de l'extrémité (47) du boitier (21) par lequel ce dernier est inséré dans l'embase (24), la platine d'interface (23) comportant une surface plane (41) qui prolonge la paroi dudit boitier (21) et qui présente deux bords latéraux et un bord frontal (44).

8. Système d'assemblage selon la revendication 7, **caractérisé en ce que** les prolongements latéraux (32) de la seconde face d'appui (312) sont conformés de façon à ce que, lorsque l'élément d'assemblage (22) est fixé sur la platine d'interface (23), une extrémité de la partie centrale (31) prenne appui sur la platine (23), de sorte que la première face d'appui (311) de l'élément d'assemblage (22) se trouve positionnée dans le prolongement de l'extrémité (47) du boitier (21) par lequel ce dernier est inséré dans l'embase (24).

9. Système d'assemblage selon l'une des revendications 7 ou 8, **caractérisé en ce que** la surface plane (41) de la platine d'interface (23) est bordée sur ses bords latéraux de parois (42) définissant deux rainures opposées (43), placées en retrait par rapport au bord frontal (44) de la surface plane (41), dont les largeurs correspondent sensiblement à l'épaisseur des prolongement latéraux (32) de l'élément d'assemblage (22) de telle sorte que, lorsque l'élément d'assemblage (22) est monté sur la platine d'interface (23), les prolongements latéraux (32) viennent s'insérer dans les rainures (43) jusqu'à ce qu'ils viennent au contact de la surface plane (41).

10. Système d'assemblage selon la revendication 9, **caractérisé en ce que** des bords des deux prolongements latéraux (32) de l'élément d'assemblage (22) sont destinés à venir au contact de la surface plane (41) de la platine d'interface (23), et sont conformés de façon à présenter chacun un prolongement (324) formant une patte de fixation élastique, les pattes de fixation (324) ainsi formées étant configurées et agencées de façon à venir au contact du bord frontal (44) de la surface plane (41), au niveau de deux encoches (45) formant des zones de retrait, lesdites encoches (45) étant configurées de telle façon que, lorsque les deux prolongements latéraux (32) sont insérés dans les rainures (43), les extrémités des pattes de fixation (324) traversent la surface plane (41) de la platine d'interface (23) au niveau des encoches (45) et viennent bloquer, par leurs extrémités (325), les bords des prolongements latéraux (32) contre la surface plane (41) de la platine d'interface (23).

11. Système d'assemblage selon l'une quelconque des revendications précédentes, **caractérisé en ce que** l'embase de réception (24) comporte sur ses parois internes des nervures saillantes (55) agencées de façon à assurer le maintien du boitier (21) équipé de l'élément d'assemblage (22), lorsque celui-ci est mis en place dans l'embase de réception (24).

12. Système d'assemblage selon la revendication 11, **caractérisé en ce que** l'une des faces (52) de la paroi de l'embase de réception (24) comporte une ouverture longitudinale (56) agencée de telle façon que ses bords (57) assurent le guidage du boitier (21) au niveau de l'élément d'assemblage (22) de façon à ce que, lorsque le boitier (21) est inséré dans l'embase de réception (24), le moyen de fixation (61) de l'élément d'assemblage (22) se trouve naturellement en regard de celui (54) de l'embase (24) avec lequel il coopère.

13. Dispositif lumineux pour véhicule, comprenant au moins un système d'assemblage selon l'une quelconque des revendications précédentes.

14. Procédé pour réaliser le montage d'un boitier électronique sur un dispositif lumineux pour véhicule au moyen d'un système d'assemblage selon l'une quelconque des revendications 1 à 12, **caractérisé en ce qu'**il comporte:
- une première étape de montage de l'élément d'assemblage (22) sur le boitier, le montage étant réalisé par fixation de l'élément d'assemblage (22) sur la platine d'interface (23) solidaire du boitier (21);
- une seconde étape de montage du boitier (21) équipé de l'élément d'assemblage (22) sur le dispositif lumineux, le montage étant réalisé en insérant le boitier (21) dans l'embase de réception (24) par son bord à l'extrémité duquel est monté l'élément d'assemblage (22), jusqu'à ce que l'élément d'assemblage (22) soit en butée contre le fond (53) de l'embase (24).

## Patentansprüche

1. System (22, 23, 24) zur Montage eines elektronischen Steuergeräts (21) zur Steuerung einer Leuchtvorrichtung für ein Fahrzeug auf eine Wand der Leuchtvorrichtung, wobei das System aufweist:
- eine Schnittstellenplatine (23), die fest mit dem elektronischen Steuergerät (21) verbunden und an einem Ende (47) des elektronischen Steuergeräts (21) angeordnet ist,
- ein Montageelement (22), das so konfiguriert ist, dass es mittels der Schnittstellenplatine (23) am Gerät (21) befestigt wird, und
- einen Aufnahmesockel (24) mit einem Boden (53), der vorgesehen ist, um mit einer Wand der Leuchtvorrichtung fest verbunden zu sein, so konfiguriert, dass er einen Aufnahmebehälter bildet, in dem das mit dem Montageelement (22) ausgestattete Gerät (21) untergebracht werden kann, wobei das Montageelement (22) dann mit dem Boden (53) des Aufnahmebehälters in Kontakt ist; wobei das Montageelement (22) und der Boden (53) des Aufnahmesockels (24) Befestigungselemente (61, 54) aufweisen, die konfiguriert sind, so zusammenzuwirken, dass sie den Halt des Geräts (21) im Sockel (24) nach seiner Einführung in diesen letzteren gewährleisten,
**dadurch gekennzeichnet, dass** das Montageelement (22) einen zentralen Bereich (31), der ein Rohr parallelepipedischer Form mit zwei offenen Enden bildet, und eine Außenwand aufweist, die eine erste und eine zweite, einander gegenüberliegende Auflageseiten (311, 312) und zwei Seitenflächen (313, 314) aufweist, wobei die erste Auflageseite (311) dazu bestimmt ist, sich auf den Boden (53) des Aufnahmesockels (24) aufzulegen, wenn das Gerät (21) im Sockel angeordnet ist, und die zweite Auflageseite (312) zwei ebene seitliche Verlängerungen (32) aufweist, die gestaltet sind, um die Positionierung und die Befestigung des Montageelements (22) auf der Schnittstellenplatine (23) zu gewährleisten.

2. Montagesystem nach Anspruch 1, **dadurch gekennzeichnet, dass** das Montageelement (22) und die Schnittstellenplatine (23) so konfiguriert und gegenüber dem elektronischen Steuergerät (21) angeordnet sind, dass das Montageelement (22) in der Verlängerung des Endes (47) des Geräts (21) positioniert ist, über das letzteres (21) in den Aufnahmesockel (24) eingeführt wird.

3. Montagesystem nach einem der Ansprüche 1 oder 2, **dadurch gekennzeichnet, dass** die Schnittstellenplatine (23) ein integrierender Bestandteil der Außenwand des elektronischen Steuergeräts ist.

4. Montagesystem nach Anspruch 3, **dadurch gekennzeichnet, dass** der Boden (53) des Sockels (24) einen Befestigungsblock (54) aufweist, und die erste Auflageseite (311) des zentralen Bereichs (31) des Montageelements (22) in Kontakt mit dem Boden (53) des Sockels so gestaltet ist, dass sie das Befestigungselement umfasst, das mit dem Befestigungsblock (54) zusammenwirkt, um den Halt des Geräts (21) im Inneren des Sockels (24) zu gewährleisten.

5. Montagesystem nach Anspruch 4, **dadurch gekennzeichnet, dass** die erste Auflageseite (311) des zentralen Bereichs (31) des Montageelements (22) eine Längsöffnung (315) aufweist, der gegenüber eine elastische Scheibe mit Klemmvorrichtung (61) so positioniert ist, dass, wenn das Gerät (21) im Sockel (24) angeordnet ist, die elastische Scheibe (61) den Befestigungsblock (54) einspannt.

6. Montagesystem nach Anspruch 5, **dadurch gekennzeichnet, dass** das Profil der Innenwand (316) des Montageelements (22) zwei Längsrillen (317) definiert, die sich zwischen den zwei Enden des zentralen Bereichs in der Nähe der ersten Auflageseite (311) erstrecken, wobei die Längsrillen (317) so konfiguriert sind, dass die elastische Scheibe (61) in sie eingeführt werden kann.

7. Montagesystem nach einem der Ansprüche 1 bis 6, **dadurch gekennzeichnet, dass** die Schnittstellenplatine (23) auf dem Gerät (21) im Bereich des Endes (47) des Geräts (21) angeordnet ist, über das letzteres in den Sockel (24) eingeführt wird, wobei die Schnittstellenplatine (23) eine ebene Fläche (41) aufweist, die die Wand des Geräts (21) verlängert und die zwei Seitenränder und einen Stirnrand (44) aufweist.

8. Montagesystem nach Anspruch 7, **dadurch gekennzeichnet, dass** die seitlichen Verlängerungen (32) der zweiten Auflageseite (312) so gestaltet sind, dass, wenn das Montageelement (22) an der Schnittstellenplatine (23) befestigt ist, ein Ende des zentralen Bereichs (31) sich auf die Platine (23) auflegt, so dass die erste Auflageseite (311) des Montageelements (22) in der Verlängerung des Endes (47) des Geräts (21) positioniert wird, über das letzteres in den Sockel (24) eingeführt wird.

9. Montagesystem nach einem der Ansprüche 7 oder 8, **dadurch gekennzeichnet, dass** die ebene Fläche (41) der Schnittstellenplatine (23) an ihren Seitenrändern von Wänden (42) umrandet wird, die zwei gegenüberliegende Rillen (43) definieren, die bezüglich des Stirnrands (44) der ebenen Fläche (41) rückversetzt sind, deren Breiten im Wesentlichen der Dicke der seitlichen Verlängerungen (32) des Montageelements (22) entsprechen, so dass, wenn das Montageelement (22) auf die Schnittstellenplatine (23) montiert ist, die seitlichen Verlängerungen (32) in die Rillen (43) eingeführt werden, bis sie mit der ebenen Fläche (41) in Kontakt kommen.

10. Montagesystem nach Anspruch 9, **dadurch gekennzeichnet, dass** Ränder der zwei seitlichen Verlängerungen (32) des Montageelements (22) dazu bestimmt sind, mit der ebenen Fläche (41) der Schnittstellenplatine (23) in Kontakt zu kommen, und so gestaltet sind, dass sie je eine Verlängerung (324) aufweisen, die eine elastische Befestigungslasche bildet, wobei die so gebildeten Befestigungslaschen (324) so konfiguriert und angeordnet sind, dass sie mit dem Stirnrand (44) der ebenen Fläche (41) im Bereich von zwei Kerben (45) in Kontakt kommen, die rückversetzte Zonen bilden, wobei die Kerben (45) so konfiguriert sind, dass, wenn die zwei seitlichen Verlängerungen (32) in die Rillen (43) eingeführt sind, die Enden der Befestigungslaschen (324) die ebene Fläche (41) der Schnittstellenplatine (23) im Bereich der Kerben (45) durchqueren und durch ihre Enden (325) die Ränder der seitlichen Verlängerungen (32) gegen die ebene Fläche (41) der Schnittstellenplatine (23) blockieren.

11. Montagesystem nach einem der vorhergehenden Ansprüche, **dadurch gekennzeichnet, dass** der Aufnahmesockel (24) auf seinen Innenwänden vorstehende Rippen (55) aufweist, die so angeordnet sind, dass sie den Halt des mit dem Montageelement (22) ausgestatteten Geräts (21) gewährleisten, wenn dieses in den Aufnahmesockel (24) eingesetzt ist.

12. Montagesystem nach Anspruch 11, **dadurch gekennzeichnet, dass** eine der Seiten (52) der Wand des Aufnahmesockels (24) eine Längsöffnung (56) aufweist, die so angeordnet ist, dass ihre Ränder (57) die Führung des Geräts (21) im Bereich des Montageelements (22) so gewährleisten, dass, wenn das Gerät (21) in den Aufnahmesockel (24) eingeführt wird, die Befestigungseinrichtung (61) des Montageelements (22) sich natürlich gegenüber derjenigen (54) des Sockels (24) befindet, mit der sie zusammenwirkt.

13. Leuchtvorrichtung für ein Fahrzeug, die mindestens ein Montagesystem nach einem der vorhergehenden Ansprüche enthält.

14. Verfahren zur Durchführung des Einbaus eines elektronischen Steuergeräts auf eine Leuchtvorrichtung für ein Fahrzeug mittels eines Montagesystems nach einem der Ansprüche 1 bis 12, **dadurch gekennzeichnet, dass** es aufweist:
- einen ersten Schritt des Einbaus des Montageelements (22) auf dem Gerät, wobei der Einbau durch Befestigung des Montageelements (22) an der fest mit dem Gerät (21) verbundenen Schnittstellenplatine (23) erfolgt;
- einen zweiten Schritt des Einbaus des mit dem Montageelement (22) ausgestatteten Geräts (21) auf der Leuchtvorrichtung,
wobei der Einbau durchgeführt wird, indem das Gerät (21) über seinen Rand in den Aufnahmesockel (24), an dessen Ende das Montageelement (22) eingebaut ist, eingeführt wird, bis das Montageelement (22) gegen den Boden (53) des Sockels (24) in Anschlag ist.

## Claims

1. System (22, 23, 24) for assembling an electronic control housing (21) of a lighting device for a vehicle on a wall of the said lighting device, the said system comprising:
- an interface plate (23) which is integral with the electronic housing (21), and is placed at an end (47) of the electronic housing (21);
- an assembly element (22) which is configured such as to be secured on the housing (21) by means of the interface plate (23); and
- a receipt base (24) comprising a bottom (53) and provided to be integral with a wall of the lighting device, which is configured such as to form a receptacle in which the housing (21) equipped with the assembly element (22) can be accommodated, the assembly element (22) then being in contact with the bottom (53) of the said receptacle, the assembly element (22) and the bottom (53) of the receipt base (24) comprising securing elements (61, 54) which are configured to cooperate, such as to ensure the retention in place of the housing (21) in the base (24) after its insertion in the latter,
**characterized in that**
the assembly element (22) comprises a central part (31) forming a tube with a parallelepiped form with two open ends, and an outer wall comprising a first and a second support faces (311, 312) which are opposite one another, and two lateral faces (313, 314), the first support face (311) being designed to be supported on the bottom (53) of the receipt base (24) when the housing (21) is placed in the base, and the second support face (312) comprising two flat lateral extensions (32) which are designed to ensure the positioning and securing of the assembly element (22) on the interface plate (23).

2. Assembly system according to Claim 1, **characterized in that** the assembly element (22) and the interface plate (23) are configured and arranged relative to the electronic housing (21) such that the assembly element (22) is positioned in the extension of the end (47) of the housing (21) by means of which the latter (21) is inserted in the receipt base (24).

3. Assembly system according to one of Claims 1 or 2, **characterized in that** the interface plate (23) is an integral part of the outer wall of the electronic housing (21).

4. Assembly system according to Claim 3, **characterized in that**, the bottom (53) of the base (24) comprises a securing stud (54) and the first support face (311) of the central part (31) of the assembly element (22), in contact with the bottom (53) of the base, is formed such as to incorporate the securing element which cooperates with the said securing stud (54), in order to ensure the retention of the housing (21) inside the base (24) .

5. Assembly system according to Claim 4, **characterized in that** the first support face (311) of the central part (31) of the assembly element (22) has a longitudinal opening (315), opposite which a resilient claw washer (61) is positioned, such that, when the housing (21) is placed in the base (24), the resilient washer (61) clamps the securing stud (54).

6. Assembly system according to Claim 5, **characterized in that** the profile of the inner wall (316) of the assembly element (22) defines two longitudinal grooves (317) which extend between the two ends of the central part, in the vicinity of the first support face (311), the said longitudinal grooves (317) being configured such that the resilient washer (61) can be inserted in them.

7. Assembly system according to any one of Claims 1 to 6, **characterized in that** the interface plate (23) is arranged on the housing (21) at the end (47) of the housing (21) by means of which the latter is inserted in the base (24), with the interface plate (23) comprising a flat surface (41) which extends the wall of the said housing (21), and has two lateral edges and a frontal edge (44) .

8. Assembly system according to Claim 7, **characterized in that** the lateral extensions (32) of the second support face (312) are formed such that, when the assembly element (22) is secured on the interface plate (23), an end of the central part (31) is supported on the plate (23), such that the first support face (311) of the assembly element (22) is positioned in the extension of the end (47) of the housing (21) by means of which the latter is inserted in the base (24).

9. Assembly system according to either of Claims 7 and 8, **characterized in that** the flat surface (41) of the interface plate (23) is bordered on its lateral edges by walls (42) which define two opposite grooves (43), placed recessed relative to the frontal edge (44) of the flat surface (41), the widths of which correspond substantially to the thickness of the lateral extensions (32) of the assembly element (22), such that, when the assembly element (22) is fitted on the interface plate (23), the lateral extensions (32) are inserted in the grooves (43) until they come into contact with the flat surface (41).

10. Assembly system according to Claim 9, **characterized in that** edges of the two lateral extensions (32) of the assembly element (22) are designed to come into contact with the flat surface (41) of the interface plate (23) and are formed such as each to have an extension (324) forming a resilient securing lug, the securing lugs (324) thus formed being configured and arranged such as to come into contact with the frontal edge (44) of the flat surface (41), at two notches (45) which form recessed areas, the said notches (45) being configured such that, when the two lateral extensions (32) are inserted in the grooves (43), the ends of the securing lugs (324) pass through the flat surface (41) of the interface plate (23) at the notches (45), and, by means of their ends (325), block the edges of the lateral extensions (32) against the flat surface (41) of the interface plate (23).

11. Assembly system according to any one of the preceding claims, **characterized in that** the receipt base (24) comprises on its inner walls projecting ribs (55) which are arranged such as to ensure the retention of the housing (21) equipped with the assembly element (22), when the latter is put into place in the receipt base (24).

12. Assembly system according to Claim 11, **characterized in that** one of the faces (52) of the wall of the receipt base (24) comprises a longitudinal opening (56) which is arranged such that its edges (57) ensure the guiding of the housing (21) at the assembly element (22) such that, when the housing (21) is inserted in the receipt base (24), the means (61) for securing the assembly element (22) is naturally opposite that (54) of the base (24) with which it cooperates.

13. Lighting device for a vehicle, comprising at least one assembly system according to any one of the preceding claims.

14. Method for carrying out the assembly of an electronic housing on a lighting device for a vehicle by means of an assembly system according to any one of Claims 1 to 12, **characterized in that** it comprises:
- a first step of fitting the assembly element (22) on the housing, the assembly being carried out by securing the assembly element (22) on the interface plate (23) which is integral with the housing (21);
- a second step of fitting the housing (21) equipped with the assembly element (22) on the lighting device, the assembly being carried out by inserting the housing (21) in the receipt base (24) by means of its edge at the end of which the assembly element (22) is fitted, until the assembly element (22) abuts the bottom (53) of the base (24).
